# EUROPEAN PATENT SPECIFICATION

(11) **EP 1 864 522 B1**
(45) Date of publication and mention of the grant of the patent: **11.01.2012**
(21) Application number: 05729545.3
(22) Date of filing: 01.04.2005
(51) Int. Cl.: H04L 29/06

(54) **METHOD FOR INITIATING IMS BASED COMMUNICATIONS**
VERFAHREN ZUR EINLEITUNG VON IMS-BASIERTER KOMMUNIKATION
PROCEDE PERMETTANT D'ETABLIR DES COMMUNICATIONS REPOSANT SUR UN SYSTEME IMS

(43) Date of publication of application: 12.12.2007
(60) Divisional application: 11155537.1
(73) Proprietor: Telefonaktiebolaget LM Ericsson (publ), 164 83 Stockholm (SE)
(72) Inventor: TERRILL, Stephen, ES-28006 Madrid (ES); PRZYBYSZ, Hubert, S-126 37 Stockholm (SE)
(74) Representative: Sjöberg, Mats Hakan
(86) International application number: PCT/EP2005/051491
(87) International publication number: WO 2006/102943

(56) References cited:
- US-A1- 2004 184 452
- "Digital cellular telecommunications system (Phase 2+); Universal Mobile Telecommunications System (UMTS); IP Multimedia Subsystem (IMS); Stage 2 (3GPP TS 23.228 version 6.9.0 Release 6); ETSI TS 123 228" ETSI STANDARDS, EUROPEAN TELECOMMUNICATIONS STANDARDS INSTITUTE, SOPHIA-ANTIPO, FR, vol. 3-SA2, no. V690, March 2005 (2005-03), XP014027532 ISSN: 0000-0001 cited in the application
- CAMARILLO G BLANCO ERICSSON G: "The Session Initiation Protocol (SIP) P-User-Database Private-Header (P-Header)" DRAFT-CAMARILLO-SIPPING-USER-DATABASE-00.T XT, 11 February 2005 (2005-02-11), pages 1-9, XP015011494 IETF ISSN: 0000-0004
- 3GPP TSG SA WG3 SECURITY - S3#28: "Analysis of HTTP Authentication" S3-030256, [Online] 9 May 2003 (2003-05-09), pages 1-4, XP002357286 Berlin, Germany Retrieved from the Internet: URL:www.3gpp.org/ftp/tsg_sa/WG3_Security/ TSGS3_28_Berlin/Docs/PDF/S3-030256.pdf>

## Description

### Field of the Invention

The present invention relates to a method and apparatus for initiating IP Multimedia Subsystem (IMS) based communications and in particular for initiating communications for users that are not registered with the IMS.

### Background to the Invention

IP Multimedia (IPMM) services provide a dynamic combination of voice, video, messaging, data, etc. within the same session. By growing the numbers of basic applications and the media which it is possible to combine, the number of services offered to the end users will grow, and the inter-personal communication experience will be enriched. This will lead to a new generation of personalised, rich multimedia communication services, including so-called "combinational IP Multimedia" services which are considered in more detail below.

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Release 5 and Release 6). IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

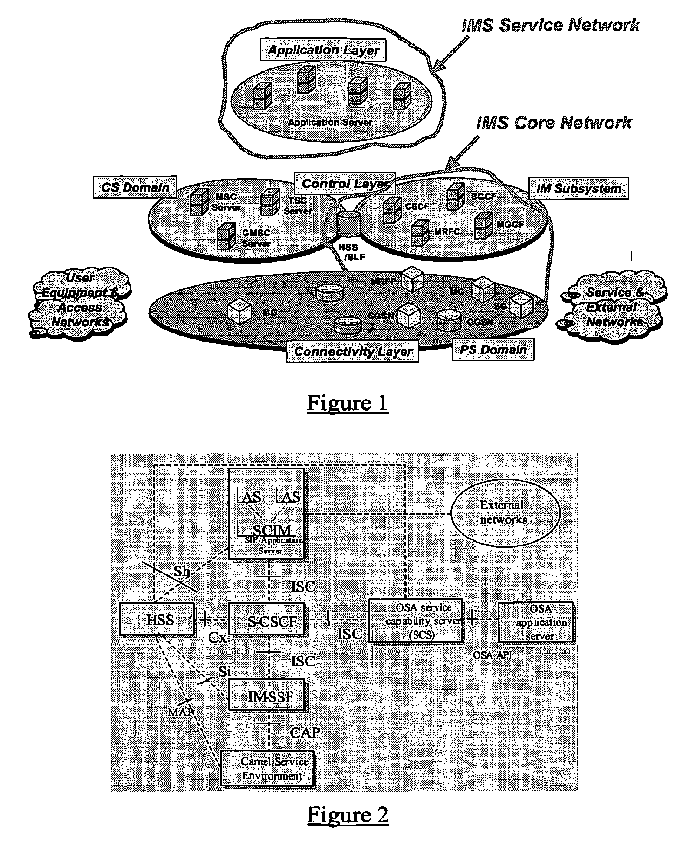

Figure 1 illustrates schematically how the IMS fits into the mobile network architecture in the case of a GPRS/PS access network. Call/Session Control Functions (CSCFs) operate as SIP proxies with the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if a S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried for a user by the I-CSCF in the case where the user is called by another party, and the user is not currently allocated an S-CSCF.] When a registered user subsequently sends a session request to the IMS, the P-CSCF is able to forward the request to the selected S-CSCF based on information received from the S-CSCF during the registration process.

Within the IMS service network, application servers (ASs) are provided for implementing IMS service functionality. Whilst it was originally envisaged that ASs would operate as "slaves" to the IMS CSCFs, responding to requests delegated by the S-CSCFs, this need not be the case and indeed it is now expected that ASs may have interfaces to external (i.e. non-3GPP) networks, and may receive an internal stimulus to perform an action (e.g. a timer expiry). Figure 2 illustrates the IMS Service Control (ISC) interface between an AS and an S-CSCF, as well as other interfaces within the IMS. Although the AS in Figure 2 is shown as having only a single interface to an S-CSCF it will be appreciated that in practice the ISC interface will extend across a communication network to which many (or all) of the CSCF servers of a given operator's network are connected, allowing an AS to communicate with all of these CSCFs. [Other entities illustrated in Figure 1 will be well known to those of skill in the art.]

A further interface (Ut) exists between the AS and the user terminal (TS23.002) although this is not shown in the Figure. The Ut interface enables the user to manage information related to his or her services, e.g. creation and assignment of Public Service Identities, management of authorisation policies that are used for example by "presence" services, conference policy management, etc.

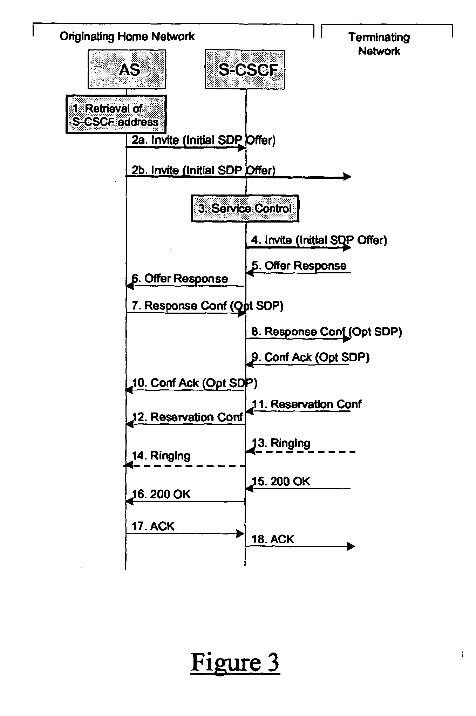

The current IMS architecture allows for an AS to initiate an IMS session in response to the receipt by the AS of an appropriate request over an external interface. One might for example envisage that an IMS session request is sent to the AS over an HTTP interface, where a user initiates the sending of a request by accessing a web page on the Internet. In this case, upon receipt of the session request, the AS will first contact a Home Subscriber Server (HSS) of the initiating user to determine whether or not the user is already registered with the IMS, The AS sends to the HSS a SIP identity generated for the user and which the HSS can use to determine whether or not the user is registered. If so, the HSS will send to the AS the identity of the S-CSCF already allocated to the user. The AS will then forward a SIP INVITE to the identified S-CSCF, and the session set-up procedure will continue as illustrated in Figure 3. An example scenario where this situation might arise is where a 3GPP mobile subscriber is registered with the IMS, and the subscriber then logs on, via a home PC, to a web page and requests an IMS session via that channel.

If it is the case that the user is not registered already with the IMS, and this is reported to the AS by the HSS, the request cannot be processed. TS.228 specifically states that *"If the AS could not acquire a S-CSCF address for the Public User Identity, the AS shall not initiate a session on behalf of the user".*

It will be appreciated that a similar problem arises where the stimulus for establishing an IMS session is generated internally, within the AS. For example, one can envisage a scenario where the AS has been requested to perform an update of a user's status on a presence server at a requested time. As in the case of an externally originating service, the current standards will allow the AS to initiate the require IMS session only if the user in question is registered with the IMS.

Whilst the discussion above relates to a user that is assumed to be a user possessing a public user identity, the user may be an application, i.e. possessing a public service identity.

### Summary of the Invention

It is recognised that users may well want to access IMS services even when they are not already registered to the IMS, and in particular where the means that they are using to initiate the IMS communication request does not facilitate IMS registration.

According to a first aspect of the present invention there is provided a method of initiating an IP Multimedia Subsystem communication for a user that is not registered *a priori* with the IP Multimedia Subsystem, the method comprising:
receiving a communication request from the unregistered user at a Session Initiation Protocol Application Server via an interface to an external network, or receiving an internally or externally generated stimulus requiring the establishment of an IP Multimedia Subsystem communication;
allocating a Serving Call/State Control Function to the unregistered user;
sending a Session Initiation Protocol request from the Application Server to the allocated Serving Call/State Control Function; and
establishing the requested communication.

In a first embodiment of the present invention, the step of allocating a Serving Call/State Control Function to the user is carried out by the Application Server. The Application Server obtains Serving Call/State Control Function capabilities from a Home Subscriber Server and allocates a Serving Call/State Control Function based upon these capabilities. [AS must have or be able to obtain knowledge of an available S-CSCF.] The Application Server then sends a Session Initiation Protocol request to the allocated Serving Call/State Control Function.

In a second embodiment of the present invention, the step of allocating a Serving Call/State Control Function to the user is carried out by an Interrogating Call/State Control Function. The Application Server sends a Session Initiation Protocol request to the Interrogating Call/State Control Function, and in response the Interrogating Call/State Control Function obtains Serving Call/State Control Function capabilities from a Home Subscriber Server and allocates a Serving Call/State Control Function based upon these capabilities. The Interrogating Call/State Control Function then sends the Session Initiation Protocol request to the allocated Serving Call/State Control Function.

In a third embodiment of the invention, the step of allocating a Serving Call/State Control Function to the user is carried out by a Serving Call/State Control Function. The Application Server sends a Session Initiation Protocol request to a Serving Call/State Control Function, and in response that Serving CSCF obtains Serving Call/State Control Function capabilities from a Home Subscriber Server and allocates a Serving Call/State Control Function based upon these capabilities. The Serving Call/State Control Function then sends a Session Initiation Protocol request to the allocated Serving Call/State Control Function if the allocated Serving Call/State Control Function is other than itself.

It will be appreciated that the Application Server may initially be unaware that the user is not registered with the IP Multimedia Subsystem, and will send a query to the Home Subscriber Server to determine whether or not the user is registered. In order to provide improved security, the response from the Home Subscriber Server informing the Application Server that the user is not registered may be accompanied by a security "token". This security token provides a means for authenticating the Application Server, and is included with the Session Initiation Protocol request sent by the Application Server. An allocated Serving Call/State Control Function is able to authenticate the Session Initiation Protocol request as originating from a valid Application Server, e.g. by forwarding the security token to the Home Subscriber Server and relying upon the Home Subscriber Server to return Serving Call/State Control Function capabilities only if the token is valid.

There is provided a method of operating an Application Sever in order to initiate an IP Multimedia Subsystem communication for a user that is not registered a *priori* with the IP Multimedia Subsystem, the method comprising:
receiving a communication request from said user via an interface to an external network, or receiving an internally or externally generated stimulus requiring the establishment of an IP Multimedia Subsystem communication;
allocating a Serving Call/State Control Function to the user; and
forwarding a Session Initiation Protocol request to the allocated Serving Call/State Control Function.

There is provided a method of operating an Interrogating Call/State Control Function in order to initiate an IP Multimedia Subsystem communication for a user that is not registered *a priori* with the IP Multimedia Subsystem, the method comprising:
receiving a communication request associated with said user from an Application Server;
allocating a Serving Call/State Control Function to the user; and
forwarding a Session Initiation Protocol request to the allocated Serving Call/State Control Function.

There is provided a method of operating a Serving Call/State Control Function in order to initiate an IP Multimedia Subsystem communication for a user that is not registered a *priori* with the IP Multimedia Subsystem, the method comprising:
receiving a communication request associated with said user from an Application Server;
allocating a Serving Call/State Control Function to the user; and
if the allocated Serving Call/State Control Function is a Serving Call/State Control Function other than itself, forwarding a Session Initiation Protocol request to the allocated Serving Call/State Control Function.

According to the relevant standards, the allocated Serving Call/State Control Function receives a user identifier specific profile from the Home Subscriber Server. This profile should include support for unregistered originating calls.

There is provided a method of securing signalling sent between a Call/State Control Function server of an IP Multimedia Subsystem and a Session Initiation Protocol Application Server, the signalling being associated with a communication establishment for a user, the method comprising:
sending a security token from a Home Subscriber Server of the user to the Call/State Control Function server or Session Initiation Protocol Application Server;
sending the received security token from the Call/State Control Function server or the Session Initiation Protocol Application Server to the other of the Session Initiation Protocol Application Server or the Call/State Control Function; and
at the receiving Call/State Control Function server or Session Initiation Protocol Application Server, verifying the authenticity of the security token by communicating with the Home Subscriber Server.

The term "communication" as used here encompasses both session establishment procedures and non-session establishment procedures including for example simple SIP message exchanges.

### Brief Description of the Drawings

Figure 1 illustrates schematically the integration of an IP Multimedia Subsystem into a 3G mobile communications system;
Figure 2 illustrates schematically certain entities of the IP Multimedia Subsystem including an Application Server and a Serving Call/State Control Function;
Figure 3 is a signalling diagram illustrating signalling associated with the initiation of an IP Multimedia Subsystem session by an Application Server;
Figure 4 is a signalling diagram illustrating signalling associated with the initiation of an IP Multimedia Subsystem session by an Application Server according to a first embodiment of the invention;
Figure 5 is a signalling diagram illustrating signalling associated with the initiation of an IP Multimedia Subsystem session by an Application Server according to a second embodiment of the invention; and
Figure 6 is a signalling diagram illustrating signalling associated with the initiation of an IP Multimedia Subsystem session by an Application Server according to a third embodiment of the invention;

### Detailed Description of Certain Embodiments

The problem which the present invention addresses is that, according to the state of the art, a Session Initiation Protocol (SIP) Application Server (AS) cannot initiate a SIP request on behalf of an un-registered user within the IP Multimedia Subsystem (IMS) whilst still allowing for the introduction of a Serving Call/State Control Function into the signalling path to provide for originating service analysis. This may however be required in the case that the AS is utilising another (non-SIP) protocol to communicate with the user (e.g. HTTP, SMS, MMS, or other multimedia protocol [or an internal stimulus arises within the AS e.g. relating to the updating of presence status at a specified time], and the user requires the AS to initiate a SIP request on its behalf.

The basic concept employed here is to allocate a Serving Call/State Control Function (S-CSCF) when the AS determines that a S-CSCF has not already been allocated to the user (e.g. the user is not registered with the 1MS). Once an S-CSCF has been allocated, the S-CSCF informs the Home Subscriber Server (HSS) that it is now allocated as the Serving CSCF whilst maintaining the user unregistered status, and the S-CSCF downloads the user profile. The AS session request delivered to the IMS is treated as an originating request. Three alternative embodiments will now be considered, starting from the point where the AS has received an IMS session initiation request over a non-SIP interface. [Other possibilities for initiating the process include the generation of an internal stimulus within the AS, e.g. as a result of the user "programming" the AS via the Ut interface, and the receipt of an external stimulus from a source other than the user.]

### S-CSCF allocation performed by Application Server

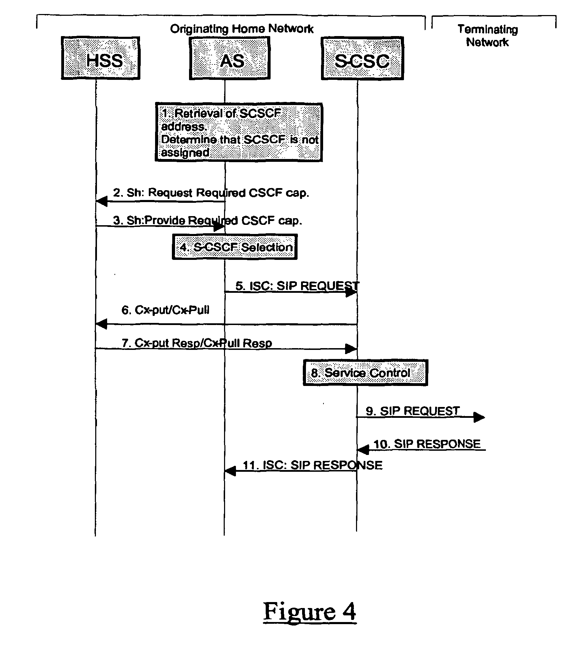

The signalling flow associated with this first embodiment is illustrated in Figure 4, where the process steps are as follows:
1. The AS attempts to retrieve the S-CSCF address for the user by contacting the Home Subscriber Server (HSS) over the Sh interface (Figure 1), sending a SIP identity of the user, generated on behalf of the user, to the HSS. The AS determines that the user is unregistered and that an S-CSCF has not been allocated to the user.
2. The AS requests the required S-CSCF capabilities from the HSS.
3. The HSS returns the required S-CSCF capabilities to the AS over the Sh interface. This functionality is new, as currently S-CSCF capabilities can only be transferred over the Cx interface.
4. The AS performs S-CSCF selection according to some predefined criteria, details of which are not relevant here. (Currently this functionality resides in the I-CSCF.)
5. The AS generates a SIP request (e.g. a SIP INVITE), including a user identity (e.g. sip:username@operator.cam). The SIP request is sent to the selected S-CSCF over the ISC interface. [The IP address of the AS is identified to the S-CSCF in the IP header.]
6. The S-CSCF retrieves the user profile from the HSS and informs the HSS that this is now the S-CSCF allocated to the user, whilst maintaining the user unregistered state in the HSS. The S-CSCF records the mapping between the allocated SIP identity and the IP address of the AS.
7. The HSS returns the user profile to the S-CSCF. The subscriber profile may now include originating unregistered service profile information, as well as originating registered, terminating registered, and terminating unregistered service profile information.
8. The S-CSCF performs any service control based on the received user profile (e.g. linking to a further AS), and records the mapping between the allocated SIP identity and the IP address of the AS. Service control may involve, for example, utilising screening filters to control user access to IMS services.
9. The SIP request is forwarded to the appropriate destination.
10. A SIP response is received from the destination.
11. The SIP response is forwarded to the AS. This establishes the SIP session.

### S-CSCF allocation performed by I-CSCF

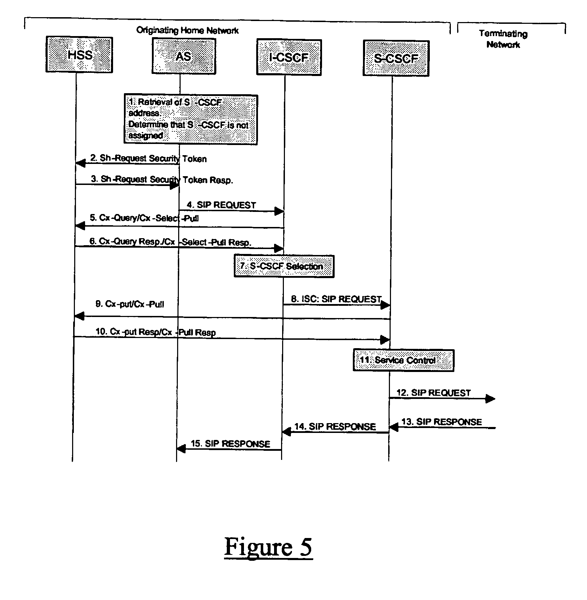

The signalling flow associated with this second embodiment is illustrated in Figure 5, where the process steps are as follows:
1. The AS attempts to retrieve the S-CSCF address for the user from the HSS. The AS determines that the user is unregistered and that an S-CSCF has not been allocated to the user as described above.
2. The AS requests a security token from the HSS. This is required in order for the allocated S-CSCF (see below) to confirm that the request is valid. Without this security mechanism there is a risk that another SIP entity (e.g. a registered SIP user) can send a bogus session initiation request to an S-CSCF, and that the S-CSCF will be unable to distinguish this bogus request from a valid request sent to it by an AS. Whilst some identifier is included in the request to identify the request as originating at an AS, this is an identity which can be copied and can thus pose a security threat.
3. The HSS replies to the AS with a security token. The HSS should authenticate the AS and should authorise the AS to act on behalf of the user prior to generating the security token.
4. The AS sends a SIP request, including the security token (and the user identity and the AS's IP address), to a designated I-CSCF.
5. The I-CSCF performs a Cx-query and Cx-select-pull exchange with the HSS to obtain the required S-CSCF capabilities.
6. The HSS responds to the Cx-query and Cx-select-pull, providing the required S-CSCF capabilities.
7. The I-CSCF performs S-CSCF selection using the predefined criteria.
8. The SIP request is forwarded from the I-CSCF to the selected S-CSCF, again with the security token. The I-CSCF should not Record Route this request as it does not need to remain in the SIP signalling path after the establishment of the session.
9. The S-CSCF retrieves the user profile from the HSS and informs the HSS that it is now the S-CSCF for the user whilst maintaining the user unregistered state. The security token is included in the Cx-put/Cx-pull requests. If the validity of the token is confirmed by the HSS, then the S-CSCF knows that the SIP request has come from a valid AS. Again, this profile may include originating unregistered profile information.
10. The HSS returns the user profile to the S-CSCF (assuming that the token is valid).
11. The S-CSCF performs any required service control based on the received use profile.
12. The SIP request is forwarded to the destination.
13. A SIP response is received from the destination.
14. The SIP response is forwarded to the I-CSCF.
15. The SIP response is forwarded to the AS.
[SIP specifies that the SIP response must traverse the same nodes traversed by the SIP request. Hence, the S-CSCF does not send the response directly to the AS.]

### S-CSCF allocation performed by S-CSCF

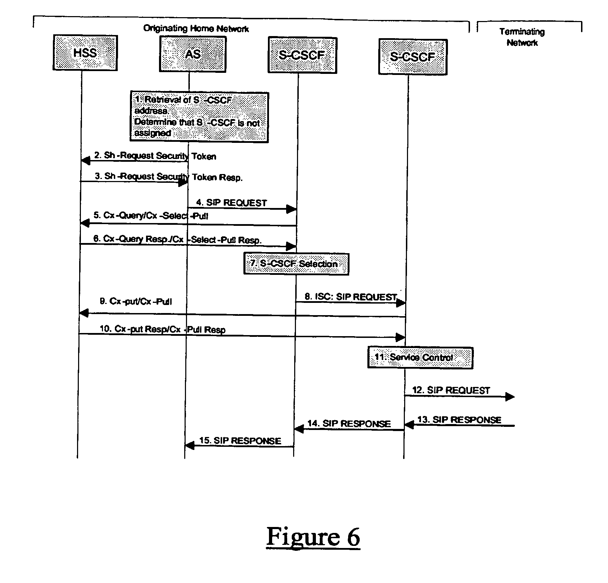

The signalling flow associated with this third embodiment is illustrated in Figure 6, where the process steps are as follows:
1. The AS attempts to retrieve the S-CSCF address for the user. The AS determines that the user is unregistered and that an S-CSCF has not been allocated to the user.
2. The AS requests a security token from the HSS. This is required in order for the S-CSCF (see below) to verify that the request has come from a valid AS.
3. The HSS replies with a security token. The HSS should authenticate the AS and should authorise the AS to act on behalf of the user prior to generating the security token.
4. The AS sends the SIP request, including the security token, to a suitable S-CSCF, e.g. the AS may make an educated guess as to the most likely S-CSCF based upon historical data for the user in question.
5. The S-CSCF performs a Cx-query and Cx-select-pull exchange with the HSS to obtain the required S-CSCF capabilities.
6. The HSS responds to the Cx-query and Cx-select-pull, providing the required S-CSCF capabilities to the S-CSCF. This is new functionality, as previously the required S-CSCF capabilities are only included in the Cx procedures to the I-CSCF.
7. The S-CSCF performs S-CSCF selection. It may select itself if it has the required S-CSCF capabilities.
8. The SIP request is forwarded from the allocating S-CSCF to the allocated S-CSCF together with the security token. [The Selecting S-CSCF should not record route the request.]
9. The allocated S-CSCF retrieves the user profile from the HSS and informs the HSS that it is now the S-CSCF for the user whilst maintaining the user unregistered status. The security token is included in the Cx-put/Cx-pull requests. If the token is validated by the HSS for that user, then the S-CSCF knows the SIP request has come from a valid AS.
10. The HSS returns the user profile to the allocated S-CSCF, assuming that the token is valid. Again, this profile includes originating unregistered profile information.
11. The S-CSCF performs any required service control based on the received user profile.
12. The SIP request is forwarded to the appropriate destination.
13. A SIP response is received from the destination.
14. The SIP response is forwarded to the first S-CSCF.
15. The SIP response is forwarded to the AS.

While the procedures detailed above relate to an AS initiating a SIP session with a user associated with a Public User Identifier (PUI), these are also applicable to an AS initiating a SIP session with a "user" associated with a Public Service identifier (PSI). The PSI is described in 3GPP TS 23.228.

It will be appreciated by the person of skill in the art that various modifications may be made to the above described embodiments without departing from the scope of the present invention. In an example modification, the security token mechanism described above with reference to the second and third embodiments may also be employed with the first embodiment in order to allow the HSS (on behalf of the allocated S-CSCF) to validate the AS from which a SIP request has been received.

It will be further appreciated by the person of skill in the art that the use of a security token issued by the HSS may be utilised to secure IMS-related communications other than those related to providing IMS services to non-registered users. For example, a security token issued by the HSS may be used generally to provide a better means of security for signalling sent from the S-CSCF to an AS (i.e. to secure all ISC signalling). In particular, when the S-CSCF receives a user profile from the HSS (i.e. at user SIP registration), it will also receives a security token. Upon receipt of this token by the AS, the AS must verify that security token is valid (by communicating with the HSS over the Sh interface). The security token would probably have a limited lifetime.

## Claims

1. A method of initiating an IP Multimedia Subsystem communication for a user that is not registered a *priori* with the IP Multimedia Subsystem, the method comprising:
receiving a communication request from the unregistered user at a Session Initiation Protocol Application Server via an interface to an external network, or receiving an internally or externally generated stimulus requiring the establishment of an IP Multimedia Subsystem communication;
allocating a Serving Call/State Control Function to the unregistered user;
sending a Session Initiation Protocol request from the Application Server to the allocated Serving Call/State Control Function; and
establishing the requested communication.

2. A method according to claim 1, wherein said step of allocating a Serving Call/State Control Function to the unregistered user is carried out by the Application Server.

3. A method according to claim 2, wherein the Application Server obtains Serving Call/State Control Function capabilities from a Home Subscriber Server and allocates a Serving Call/State Control Function based upon these capabilities, and then sends a Session Initiation Protocol request to the allocated Serving CSCF.

4. A method according to claim 1, wherein said step of allocating a Serving Call/State Control Function to the unregistered user is carried out by an Interrogating CSCF upon receipt of a Session Initiation Protocol request from the Application Server.

5. A method according to claim 4, wherein the Application Server sends the SIP request to the Interrogating CSCF, and in response the Interrogating CSCF obtains Serving Call/State Control Function capabilities from a Home Subscriber Server and allocates a Serving Call/State Control Function based upon these capabilities, the Interrogating CSCF then sending the Session Initiation Protocol request to the allocated Serving CSCF.

6. A method according to claim 1, wherein said step of allocating a Serving Call/State Control Function to the unregistred user is carried out by a Serving CSCF.

7. A method according to claim 6, wherein the Application Server sends the Session Initiation Protocol request to a Serving CSCF, and in response that Serving CSCF obtains Serving Call/State Control Function capabilities from a Home Subscriber Server and allocates a Serving Call/State Control Function based upon these capabilities, the Serving CSCF then sending the Session Initiation Protocol request to the allocated Serving CSCF if the allocated Serving CSCF is other than itself.

8. A method according to any one of the preceding claims and comprising sending from the Home Subscriber Server to the Application Server a security token, and sending this security token from the Application server together with said Session Initiation Protocol request as a means of validating the request.

9. A method according to claim 8 and comprising, upon receipt of said request at the allocated Serving Call/State Control Function, forwarding said security token to the Home Subscriber Server, the Home Subscriber Server validating the token on behalf of the Serving Call/State Control Function.

10. A method according to any one of the preceding claims and comprising transferring a service profile for the unregistered user from the Home Subscriber Server to the allocated Serving Call/State Control Function, this service profile including profile information for originating unregistered requests.

## Patentansprüche

1. Verfahren zum Einteilen einer IP-Multimediateilsystem-Kommunikation für einen Benutzer, der nicht von vornherein bei dem IP-Multimediateilsystem registriert ist, wobei das Verfahren umfasst:
Empfangen einer Kommunikationsanfordcrung von dem nicht registrierten Benutzer in einem Sitzungseinleitungsprotokoll-Anwendungsserver über eine Schnittstelle zu einem externen Netzwerk oder Empfangen eines sintern oder extern erzeugten Stimulus, der die Einrichtung einer IP-Multimediateilsystem-Kommunikation erfordert;
Zuteilen einer Serving Call/ State Control - Funktionalität zu dem nicht registrierten Benutzer;
Senden einer Sitzungseinleitungsprotokoll-Anforderung vom Anwendungsserver an die zugeteilte Serving Call/ State Control - Funktionalität und
Einrichten der angeforderten Kommunikation.

2. Verfahren nach Anspruch 1, wobei der Schritt des Zuteilens einer Serving Call/ State Control - Funktionalität zu dem nicht registrierten Benutzer durch den Anwendungsserver durchgeführt wird.

3. Verfahren nach Anspruch 2, wobei der Anwendungsserver Fähigkeiten einer Serving Call/ State Control - Funkionalität von einem Heimatteunehmerserver erlangt und eine Serving Call/ State Control) - Funktionalität auf der Grundlage dieser Fähigkeiten zuteilt und dann eine Sitzungseinleitungsprotokoll-Anforderung an die zugeteilte S-CSCF sendet.

4. Verfahren nach Anspruch 1, wobei der Schritt des Zuteilens einer Serving Call/ State Control - Funktionalität zu dem nicht registrierten Benutzer durch eine I-CSCF bei Empfang einer Sitzungseinleitungsprotoll-Anforderund vom Anwendungsserver durchgeführt wind.

5. Verfahren nach Anspruch 4, wobei der Anwendungsserver die SIP-Anforderung an die 1-CSCF. sendet und als Antwort darauf die I-CSCF Fähigkeiten einer Serving Call/ State Control - Funktionalität von einem Heimatteilnehmerserver verlangt und eine Serving Call/ State Control - Funktionalität auf der Grundlage dieser Fähigkeiten zuteilt, wobei die 1-CSCF. dann die Sitzungseinleitungsprotokoll-Anforderung an die zugeteilte Serving Call/ State Control - Funktionalität sendet.

6. Verfahren nach Anspruch 1, wobei der Schritt des Zuteilens einer Service Call/ State Control) - Funktionalität zu dem nicht registrierten Benutzer durch S-CSCF durchgeführt wird.

7. Verfahren nach Anspruch 6, wobei der Anwendungsserver die Sitzungseinleitungsprotokoll-Anforderung an eine S-CSCF sendet und als Antwort darauf diese S-CSCF Fähigkeiten eine Serving Call/ State Control - Funktionalität von einem Heimatteilnehmerserver erlangt und eine Serving Call/ State Control - Funktionalität auf der Grundlage dieser Fähigkeiten zuteilt, wobei die S-CSCF dann die Sitzungseinleitungsprotokoll-Anforderung an die zugeteilte S-CSCF sendet, wenn die zugeteilte S-CSCF eine andere als sie selbst ist.

8. Verfahren nach einem der vorhergehenden Ansprüche und umfassend: Senden eines Sicherheitstokcns vom Heimatteilnehmerserver au den Anwendungsserver und Senden dieses Sicherheitsiokens vom Anwendungsserver zusammen mit der Sitzungseinleitungsprotokoll-Anforderung als ein Mittel zur Gültigkeitsprüfung der Anforderung.

9. Verfahren nach Anspruch 8 und umfassend: bei Empfang der Anforderung in der zugeteilten Service Call/ State Control - Funktionalität erfolgendes Weiterleiten des Sicherheitstokens zum Heimatteilnehmerserver, wobei der Heimatteilnehmerserver die Gültigkeit des Tokens im Auftrag der einer Serving Cal/l State Control - funktionalität prüft.

10. Verfahren nach einem der vorhergehenden Ansprüche und umfassend:
Übermitteln eines Dienstprofils für den nicht registrierten Benutzer vom Heimatteilnehmerserver zur zugeteilten Serving Call/ State Control - Funktionalität. wobei dieses Dienstprofil Profilinformation für ausgehende nicht registrierte Anforderungen aufweist.

## Revendications

1. Procédé destiné à initier une communication de sous-système multimédia 11' pour un utilisateur qui n'est pas enregistré *a priori* auprès du sous-système multimédia IP, le procédé comprenant les étapes ci-dessous consistant a :
recevoir une demande de communication en provenance de l'utilisateur non enregistra au niveau d'un serveur d'application de protocole d'ouverture de session via une interface à un réseau externe, ou recevoir un stimulus généré de manière interne ou externe nécessitant l'établissement d'une communication de sous-système multimédia IP ;
affecter une fonction de commande d'état/appel de service à l'utilisateur non enregistré ;
envoyer une demande de protocole d'ouverture de session du serveur d'application à la fonction de commande d'état/appel de service affectée ; et
établir la communication requise.

2. Procédé selon la revendication 1, dans lequel ladite étape consistant à affecter une fonction de commande d'état/appel de service à l'utilisateur non enregistré est mise en (oeuvre par le serveur d'application.

3. Procédé selon la revendication 2, dans lequel le serveur d'application obtient des capacités de fonction de commande d'état/appel de service à partir d'un serveur d'abonné résidentiel, et affecte une fonction de commande d'état/appel de service sur la base de ces capacités, et envoie ensuite une demande de protocole: d'ouverture de session à la fonction CSCF de service affectée.

4. Procédé selon la revendication 1, dans lequel ladite étape consistant à affecter une fonction de commande d'état/appel de service à l'utilisateur non enregistré est mise en oeuvre par une fonction CSCF d'interrogation suite à la réception d'une demande de protocole d'ouverture de session en provenance du serveur d'application.

5. Procédé selon la revendication 4, dans lequel le serveur d'application envoie la demande de protocole SIP à la fonction CSCF d'interrogation, et, en réponse, la fonction CSCF d'interrogation obtient des capacités de fonction de commande d'état/appel de service à partir d'un serveur d'abonné résidentiel et affecte une fonction de commande d'état/appel de service sur la base de ces capacités, la fonction CSCF d'interrogation envoyant ensuite la demande de protocole d'ouverture de session à la fonction CSCF de service affectée.

6. Procédé selon la revendication 1, dans lequel ladite étape consistant à affecter une fonction de commande d'état/appel de service à l'utilisateur non enregistré est mise en oeuvre par une fonction CSCF. de service.

7. Procédé selon la revendication 6, dans lequel le serveur d'application envoie la demande de protocole d'ouverture de session à une fonction CSCF de service, et, en réponse, cette fonction CSCF de service obtient des capacités de fonction de commande d'état/appel de service à partir d'un serveur d'abonné résidentiel, et affecte une fonction de commande d'état/appel de service sur la base de ces capacités, la fonction CSCF de service envoyant ensuite la demande de protocole d'ouverture de session à la fonction CSCF de service affectée s'il s'agit d'une fonction CSCF de service affectée distinct.

8. Procède selon l'une quelconque des revendications précédentes, comprenant l'étape consistant à envoyer, du serveur d'abonné résidentiel au serveur d'application, un jeton de sécurité, et à envoyer ce jeton de sécurité à partir du serveur d'application avec ladite demande de protocole d'ouverture de session en qualité de moyen de validation de la demande.

9. Procédé selon la revendication 8, comprenant l'étape consistant à, lors de la réception de ladite demande au niveau de la fonction de commande d'état/appel de service affectée, acheminer ledit jeton de sécurité au serveur d'abonné résidentiel, le serveur d'abonné résidentiel validant le jeton au nom de la fonction de commande d'état/appel de service.

10. Procédé selon l'une quelconque des revendications précédentes, comprenant l'étape consistant à transférer un profil de service pour l'utilisateur non enregistré, du serveur d'abonné résidentiel à la fonction de commande d'état/appel de service affectée, ce profil de service incluant des informations de profil pour les demandes sortantes non enregistrées.
